# FASCICULE DE BREVET EUROPEEN

(11) **EP 2 484 078 B1**
(45) Date de publication et mention de la délivrance du brevet: **27.08.2014**
(21) Numéro de dépôt: 10759662.9
(22) Date de dépôt: 29.09.2010
(51) Int. Cl.: H04L 29/06

(54) **PROCÉDÉ DE SÉCURISATION DE L'EXÉCUTION D'UNE APPLICATION NFC EMBARQUÉE DANS UN ÉLÉMENT SÉCURISÉ FAISANT PARTIE INTÉGRANTE D'UN TERMINAL MOBILE**
Verfahren zur Sicherung der Durchführung einer NFC-Anwendung in einem gesicherten Element eines mobilen Endgeräts
Method for securizing the execution of a NFC application installed in a secure element integrated in a mobile terminal

(30) Priorité: 30.09.2009 EP 09305920
(43) Date de publication de la demande: 08.08.2012
(73) Titulaire: Gemalto SA, 92190 Meudon (FR)
(72) Inventeur: AMIEL, Patrice, F-13290 Aix-les-Milles (FR); POUJOL, Stéphane, F-13600 La Ciotat (FR); MARTIN, Michel, René, F-13720 La Bouilladisse (FR); BERNABEU, Gil, F-13420 Gemenos (FR)
(86) Numéro de dépôt international: PCT/EP2010/064509
(87) Numéro de publication internationale: WO 2011/039288

(56) Documents cités:
- CN-A- 101 291 494
- MARIE REVEILHAC ET AL: "Promising Secure Element Alternatives for NFC Technology", NEAR FIELD COMMUNICATION, 2009. NFC '09. FIRST INTERNATIONAL WORKSHOP ON, IEEE, PISCATAWAY, NJ, USA, 24 février 2009 (2009-02-24), pages 75-80, XP031500082, ISBN: 978-0-7695-3577-7

## Description

Le domaine de l'invention est celui des télécommunications par terminaux mobiles et concerne plus précisément un procédé de sécurisation de l'exécution d'une application NFC (Near Field Communication en anglais-Communication par champ proche en français) embarquée dans un élément sécurisé faisant partie intégrante d'un terminal mobile.

Une application NFC est un logiciel permettant un échange de données entre deux entités distantes de quelques centimètres. Cette application permet par exemple à un détenteur d'un terminal mobile, de type GSM par exemple, d'effectuer une transaction (un paiement) auprès d'un marchand.

Un terminal mobile comprend classiquement un élément sécurisé tel qu'une carte SIM ou USIM amovible permettant de s'authentifier auprès du réseau de télécommunications.

Si un abonné souhaite pouvoir payer via NFC des biens ou plus généralement utiliser un service NFC à l'aide de son téléphone mobile, une application ad-hoc doit être installée dans la carte (U)SIM de son terminal mobile. Cette installation s'opère généralement via OTA, c'est-à-dire que l'opérateur, après avoir vérifié auprès de l'établissement bancaire de l'abonné ou plus généralement au fournisseur du service NFC que celui-ci est autorisé à effectuer de telles transactions (qu'il n'est par exemple pas interdit bancaire), télécharge via OTA une application m-NFC (m signifiant que l'application NFC est destinée à un terminal mobile) dans la carte (U)SIM de l'abonné. A la suite de ce téléchargement, le lancement de l'application permet à l'abonné d'effectuer des transactions NFC.

Chaque carte (U)SIM est unique et sous la propriété de l'opérateur qui a une capacité directe de communication OTA sécurisée avec la carte. De plus, il n'est pas possible de dupliquer une carte (U)SIM. L'opérateur a donc la certitude que l'application m-NFC téléchargée l'a bien été sur la carte (U)SIM de son abonné, et que le service m-NFC ne peut pas être dupliqué de façon non-autorisée sur une autre carte du même ou d'un autre abonné.

Depuis peu de temps sont apparus des terminaux mobiles intégrant de manière fixe ou amovible des éléments sécurisés additionnels. Ces éléments sécurisés sont des cartes multi-applicatives qui sont soudées dans les terminaux (on les appelle des ESE - Embedded Secure Element en anglais - Elément sécurisé intégré en français) ou des cartes multi-applicatives qui sont insérables/retirables des terminaux (on les appelles des SMC - Secure Memory Card en anglais - carte mémoire sécurisée en français).

Un ESE ou un SMC n'a pas de capacité OTA « native » et n'est pas sous le contrôle de l'opérateur du réseau. Néanmoins, l'opérateur peut y stocker des données via OTA en s'appuyant sur les mécanismes de communication natifs au terminal mobile, mais ces mécanismes n'utilisent pas la carte (U)SIM. Il est donc possible au MNO d'installer via OTA - dans un ESE ou un SMC - des applications m-NFC similaires à celles installées dans une (U)SIM. Cependant, cette installation se fait par un canal de communication qui n'est pas sous le contrôle de l'opérateur, dans un élément de sécurité qui n'appartient pas à l'opérateur, lequel élément est contenu dans un terminal qui n'est pas contrôlé par l'opérateur.

Le problème d'utilisation d'un ESE est le suivant : lorsque l'abonné souscrit un abonnement m-NFC, l'application m-NFC est téléchargée via OTA dans l'ESE (et non pas dans la carte amovible (U)SIM). Le terminal de l'abonné, appelée terminal 1, comprend alors l'application m-NFC. L'abonné pourrait alors, en voulant flouer son opérateur, insérer sa carte amovible (U)SIM dans un autre terminal (appelé terminal 2) comprenant également un ESE et indiquer à son opérateur que l'application m-NFC ne fonctionne pas ou que le terminal 1 présente un problème. L'opérateur procéderait alors à un nouveau téléchargement de l'application m-NFC, mais cette fois-ci dans l'ESE du terminal 2 contenant la carte (U)SIM de l'abonné. De ce fait, les deux terminaux 1 et 2 comprendraient l'application m-NFC qui aurait ainsi été dupliquée et le détenteur du terminal 2 pourrait effectuer des transactions m-NFC sans y avoir été autorisé par l'opérateur.

De même, le problème d'utilisation d'un SMC est le suivant : lorsque l'abonné souscrit un abonnement m-NFC, l'application m-NFC est téléchargée via OTA dans le SMC 1 de son terminal. L'abonné pourrait alors, en voulant flouer son opérateur, insérer une autre carte amovible SMC (dite SMC 2) dans son terminal et demander un nouveau téléchargement dans SMC 2. De ce fait, les SMC 1 et 2 comprendraient l'application m-NFC qui aurait ainsi été dupliquée.

Afin de remédier à ces inconvénients, certains opérateurs ont déployé des serveurs chargés de détecter une duplication de services. A titre d'exemple, dans le domaine bancaire, les cartes bancaires sont répertoriées dans une liste noire dès lors qu'elles sont déclarées perdues ou que leur date de validité est dépassée. Cette liste noire est vérifiée à chaque transaction.

Le problème de cette solution connue est qu'elle requiert un investissement financier important afin d'interconnecter non seulement tous les terminaux de paiement NFC de commerçants à un réseau central, et qu'elle nécessite de réaliser des vérifications en temps réel. Ce type d'infrastructure n'est donc pas à portée de fournisseurs de services de Ticketing (transport en commun), de fidélité (grande surface), ou encore de couponing (grandes marques) et est réservé à des réseaux financièrement aisés, tel les réseaux bancaires. En effet, de tels fournisseurs de services ne peuvent financer l'interconnexion de tous leurs terminaux NFC à un réseau central, ni d'effectuer des vérifications en temps réel.

Le document CN 101291494 décrit un procédé permettant d'appairer un terminal mobile et une carte Sim. L'appairage est assuré par un chip NFC compris dans le terminal mobile. A la mise sous tension du terminal mobile, le chip NFC lit un identifiant de la carte Sim (par exemple le MCC, le MNC ou l'IMSI) et le compare avec un identifiant préalablement mémorisé. Si les identifiants sont différents (ce qui veut dire que la carte Sim d'origine a été remplacée par une nouvelle carte Sim), l'alimentation de la nouvelle carte Sim est coupée. On lui enlève ainsi la possibilité d'être otéable et le terminal mobile n'est plus opérationnel pour passer ou recevoir des appels.

En revanche, l'application NFC embarquée dans le chip NFC reste elle opérationnelle, c'est-à-dire que ce chip pourra encore être employé pour effectuer des transactions NFC (son alimentation n'est pas coupée).

Ce document ne décrit donc pas de solution permettant de sécuriser l'exécution d'une application NFC embarquée dans un élément sécurisé.

Ce document n'aborde pas non plus la sécurisation de l'exécution d'une application NFC embarquée dans un élément sécurisé. Il profite de l'existence d'une puce NFC qui est un élément sécurisé pour réaliser l'appairage du terminal et de la carte. Cette puce pourrait tout aussi bien être une puce Bluetooth ou autre. La puce a pour seule fonction de sécuriser le terminal mobile et non pas la partie NFC du terminal.

La présente invention a notamment pour objectif de remédier à ces inconvénients.

Plus précisément un des objectifs de l'invention est de fournir un procédé permettant, dans le cas d'utilisation d'un ESE solidaire d'un terminal mobile ou d'un SMC amovible, de détecter l'utilisation, à l'aide de ce terminal, d'un service de type m-NFC, lorsque l'utilisateur de ce service n'est pas celui qui a été autorisé antérieurement par son opérateur qui lui a téléchargé via OTA l'application m-NFC. En d'autres termes, l'objectif principal de l'invention est de proposer un procédé permettant de détecter une duplication non autorisée d'un service m-NFC.

Un autre objectif de l'invention est de prévenir l'opérateur ayant fourni ce service à un abonné lorsqu'une telle utilisation frauduleuse d'un tel service m-NFC, afin qu'il prenne des dispositions adéquates.

Ces objectifs, ainsi que d'autres qui apparaîtront par la suite, sont atteints grâce à un procédé de sécurisation de l'exécution d'une application NFC embarquée dans un élément sécurisé ne comprenant pas une application OTA native sous le contrôle de l'opérateur, l'élément sécurisé coopérant avec un terminal mobile, le terminal mobile comprenant également une carte amovible, ce procédé consistant à :
- enregistrer dans l'élément sécurisé un identifiant de la carte (U)SIM amovible au plus tard lors du chargement de l'application NFC dans l'élément sécurisé ;
- à l'occurrence d'un évènement, vérifier dans l'élément sécurisé si l'identifiant de la carte (U)SIM amovible présente dans le terminal mobile correspond à l'identifiant préalablement mémorisé dans l'élément sécurisé, afin de détecter un éventuel changement de carte amovible.

Dans un premier mode de mise en oeuvre, l'identifiant est l'ICCID de la carte (U)SIM amovible.

Dans un deuxième mode de mise en oeuvre, l'identifiant est l'IMSI de la carte (U)SIM amovible.

Dans un troisième mode de mise en oeuvre, l'identifiant est le MSISDN de la carte (U)SIM amovible.

Préférentiellement, l'évènement déclenchant la comparaison de l'identifiant mémorisé dans l'élément sécurisé avec celui de la carte (U)SIM amovible est l'occurrence d'une transaction NFC.

Dans un autre mode de mise en oeuvre, cet événement est une mise sous tension du terminal mobile.

Avantageusement, le procédé selon l'invention consiste également à notifier à l'émetteur de l'application NFC une indication de changement de carte (U)SIM amovible si un tel changement a été détecté.

Cette notification peut être réalisée par une canal OTA ou par un canal NFC.

Dans un mode de mise en oeuvre préférentiel, le procédé selon l'invention consiste à bloquer l'exécution de l'application NFC si un changement de carte (U)SIM amovible est détecté.

Avantageusement, le procédé selon l'invention consiste à bloquer, par l'émetteur de l'application NFC, l'exécution de l'application NFC via un canal OTA ou NFC.

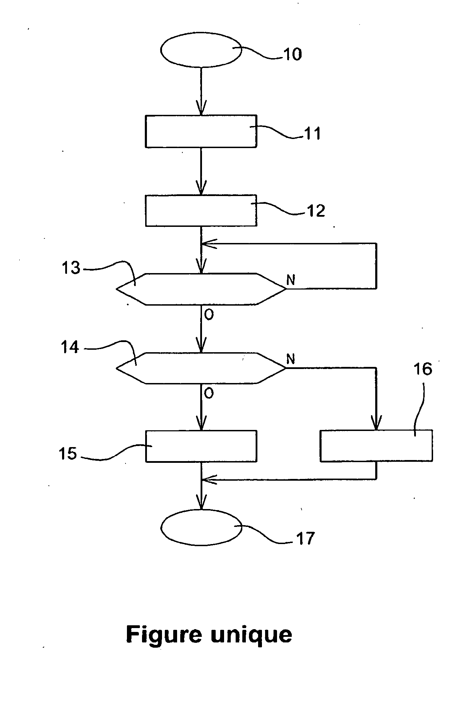

D'autres caractéristiques et avantages de l'invention apparaîtront à la lecture suivante d'un mode de mise en oeuvre avantageux de l'invention, donné à titre illustratif et non limitatif, et de la figure unique annexée représentant un mode de mise en oeuvre préférentiel du procédé selon l'invention.

On se place, comme indiqué précédemment, dans le cadre d'un terminal mobile comprenant d'une part une carte amovible de type carte (U)SIM et d'autre part un élément sécurisé faisant partie intégrante (soudé ou non) de ce terminal mobile. L'élément sécurisé ne comprend pas une application OTA native, c'est-à-dire qu'il est incapable d'effectuer une opération de type OTA (via le terminal mobile) lorsqu'il est remis à son utilisateur final. Il ne comporte pas non plus d'identifiant de type MSISDN et ne peut donc être contacté par l'opérateur du réseau de télécommunications. Cet élément sécurisé coopère avec le terminal mobile (y est compris, de manière fixe ou détachable), ce dernier comprenant également une carte amovible.

La figure unique annexée représente un mode de mise en oeuvre préférentiel du procédé selon l'invention.

Dans cette figure, l'étape 10 correspond à une étape de début.

L'étape 11 consiste à enregistrer dans l'élément sécurisé un identifiant de la carte amovible au plus tard lors du chargement de l'application NFC dans l'élément sécurisé. Cet identifiant est un identifiant unique de la carte amovible, c'est-à-dire que chaque carte a son propre identifiant et que l'identifiant de chaque carte est unique.

L'enregistrement peut avoir lieu lors de la première mise sous tension du terminal mobile comprenant la carte amovible et l'élément sécurisé intégré au terminal mobile. L'élément sécurisé est de ce fait associée à la carte amovible, et ce de manière définitive.

L'enregistrement de l'identifiant est réalisé à l'aide d'un canal de communication établi entre la carte amovible et l'élément sécurisé.

Dans un premier mode de mise en oeuvre, l'identifiant est l'ICCID de la carte amovible.

Dans un deuxième mode de mise en oeuvre, l'identifiant est l'IMSI de la carte amovible.

Dans un troisième mode de mise en oeuvre, l'identifiant est le MSISDN de la carte amovible.

Cet enregistrement de l'identifiant est réalisé de manière sécurisée, de sorte qu'une fois enregistré, l'identifiant ne peut plus être modifié.

Il est également possible de réaliser cet enregistrement lors du chargement de l'application m-NFC dans le terminal mobile, l'essentiel étant que l'identifiant soit enregistré avant la fin du chargement de l'application m-NFC dans le terminal mobile.

A l'étape 12, l'application m-NFC est définitivement chargée dans le terminal mobile et est prête à être exécutée.

A l'étape 13, il est vérifié si un événement (qui sera décrit par la suite) se produit. S'il se produit, on passe à une étape 14 qui consiste à vérifier dans l'élément sécurisé si l'identifiant de la carte amovible présente dans le terminal mobile correspond à l'identifiant préalablement mémorisé dans l'élément sécurisé, afin de détecter un éventuel changement de carte amovible.

Si l'identifiant mémorisé correspond à celui de la carte amovible présente dans le terminal mobile, cela signifie qu'il n'y a pas eu de changement de carte amovible dans le terminal : l'abonné ayant demandé le service m-NFC est donc bien celui qui a été autorisé par l'opérateur à télécharger l'application m-NFC. Dans ce cas, une transaction NFC peut s'opérer à l'étape 15.

Dans le cas contraire, c'est-à-dire si l'identifiant mémorisé ne correspond pas à celui de la carte amovible présente dans le terminal mobile, cela signifie qu'il n'y a eu un changement de carte amovible dans le terminal : l'abonné ayant demandé le service m-NFC n'est donc pas celui qui a été autorisé par l'opérateur à télécharger l'application m-NFC. Dans ce cas, l'exécution de la transaction NFC est refusée lors d'une étape 16.

Les étapes 15 et 16 sont suivies d'une étape de fin 17.

L'événement vérifié lors de l'étape 13 est typiquement l'occurrence d'une transaction NFC : l'utilisateur tente d'effectuer une telle transaction pour payer un bien ou un service ou s'identifie auprès d'un lecteur pour acheter un billet de transport en commun, bénéficier d'une remise sur un produit ou présenter sa carte de fidélité.

Cet événement peut également consister en une mise sous tension du terminal mobile.

Si à la suite de ces événements il est détecté que les identifiants ne sont pas identiques, l'étape 16 peut également consister à notifier à l'émetteur de l'application NFC une indication de changement de carte amovible. Cette notification peut s'opérer par un canal OTA (en cas de vérification de l'identifiant lors de la mise sous tension) ou par le canal NFC (en cas de vérification de l'identifiant lors d'une transaction NFC).

Durant l'étape 16, il peut également être envisagé de bloquer automatiquement l'exécution de l'application NFC.

Il peut également être envisagé, dans le cas où le terminal informe l'émetteur de l'application NFC d'un changement de carte amovible, que cet émetteur bloque l'exécution de l'application NFC via un canal OTA ou NFC.

Le procédé de l'invention permet par exemple, en cas de détection de changement de carte amovible dans le terminal embarquant l'ESE ou le SMC, de bloquer une transaction NFC et d'informer l'émetteur de l'application NFC, qui n'est pas en principe l'opérateur mais un établissement du type Eurocard, Mastercard ou VISA (marques protégées), d'un changement de carte amovible dans le terminal mobile préalablement autorisé à effectuer de telles transactions, par exemple à l'occurrence d'une nouvelle tentative de transaction NFC.

La description qui précède a été donnée à simple titre illustratif et non limitatif et l'homme du métier imaginera aisément d'autres modes de mise en oeuvre de la présente invention entrant dans le cadre des revendications.

## Revendications

1. Procédé de sécurisation de l'exécution d'une application NFC embarquée dans un élément sécurisé ne comprenant pas une application OTA native, ledit élément sécurisé coopérant avec un terminal mobile, ledit terminal mobile comprenant également une carte amovible, **caractérisé en ce qu'**il consiste à :
- enregistrer (11) dans ledit élément sécurisé un identifiant de ladite carte amovible au plus tard lors du chargement de ladite application NFC dans ledit élément sécurisé ;
- à l'occurrence d'un événement (13), vérifier (14) dans ledit élément sécurisé si l'identifiant de la carte amovible présente dans ledit terminal mobile correspond à l'identifiant préalablement mémorisé dans ledit élément sécurisé, afin de détecter un éventuel changement de carte amovible et **en ce qu'**il consiste à bloquer l'exécution de la dite application NFC si un changement de carte amovible est détecté.

2. Procédé selon la revendication 1, **caractérisé en ce que** ledit identifiant est l'ICCID de ladite carte amovible.

3. Procédé selon l'une des revendications 1 et 2, **caractérisé en ce que** ledit identifiant est l'IMSI de ladite carte amovible.

4. Procédé selon l'une des revendications 1 et 2, **caractérisé en ce que** ledit identifiant est le MSISDN de ladite carte amovible.

5. Procédé selon l'une des revendications 1 à 4, **caractérisé en ce que** ledit événement (13) est l'occurrence d'une transaction NFC.

6. Procédé selon l'une des revendications 1 à 4, **caractérisé en ce que** ledit événement (13) est une mise sous tension dudit terminal mobile.

7. Procédé selon l'une des revendications 1 à 6, **caractérisé en ce qu'**il consiste également à notifier (16) à l'émetteur de ladite application NFC une indication de changement de carte amovible si un tel changement a été détecté.

8. Procédé selon la revendication 7, **caractérisé en ce que** ladite notification est réalisée par un canal OTA.

9. Procédé selon la revendication 7, **caractérisé en ce que** ladite notification est réalisée par un canal NFC.

10. Procédé selon l'une des revendications 8 et 9, **caractérisé en ce qu'**il consiste à bloquer (16), par l'émetteur de ladite application NFC, l'exécution de ladite application NFC via un canal OTA ou NFC.

## Patentansprüche

1. Verfahren zur Sicherung der Ausführung einer NFC-Anwendung in einem Sicherungselement, das keine systemeigene OTA-Anwendung enthält, wobei dieses Sicherungselement mit einem Mobilterminal verbunden ist, dieses Mobilterminal enthält ausserdem eine austauschbare Karte, die wie folgt charakterisiert wird:
- Registrierung (11) der ID dieser austauschbaren Karte in dem genannten Sicherungselement spätestens beim Laden besagter NFC-Anwendung auf dieses Sicherungselement;
- Bei einem Fall (13) wird im Sicherungselement geprüft (14), ob die ID der austauschbaren Karte, die sich im Mobilterminal befindet, der ID entspricht, die vorher in diesem Sicherungselement gespeichert wurde, um so einen möglichen Wechsel der austauschbaren Karte festzustellen und die Ausführung besagter NFC-Anwendung zu blockieren (16), falls die austauschbare Karte ausgewechselt wurde.

2. Das Verfahren nach Anspruch 01 wird dadurch charakterisiert, dass diese ID die ICCID dieser austauschbaren Karte ist.

3. Das Verfahren nach Anspruch 01 und 02 wird dadurch charakterisiert, dass diese ID die IMSI dieser austauschbaren Karte ist.

4. Das Verfahren nach Anspruch 01 und 02 wird dadurch charakterisiert, dass diese ID die MSISDN dieser austauschbaren Karte ist.

5. Das Verfahren nach Anspruch 01 bis 04 wird dadurch charakterisiert, dass ein solcher Fall (13) Bestandteil einer NFC-Transaktion ist.

6. Das Verfahren nach Anspruch 01 bis 04 wird dadurch charakterisiert, dass das Einschalten dieses Mobilterminals ein solcher Fall (13) ist.

7. Das Verfahren nach Anspruch 01 bis 06 wird dadurch charakterisiert, dass der Emitter der NFC-Anwendung beim Auswechseln der austauschbaren Karte auch eine Mitteilung erhält, wenn ein solches Auswechseln festgestellt wurde.

8. Das Verfahren nach Anspruch 07 wird dadurch charakterisiert, dass diese Mitteilung über einen OTA-Kanal verschickt wird.

9. Das Verfahren nach Anspruch 07 wird dadurch charakterisiert, dass diese Mitteilung über einen NFC-Kanal verschickt wird.

10. Das Verfahren nach Anspruch 08 und 09 wird dadurch charakterisiert, dass der Emitter der NFC-Anwendung diese NFC-Anwendung über einen OTA- oder NFC-Kanal blockieren (16) kann.

## Claims

1. A method for protecting the execution of an NFC application embedded in a secure element not comprising a native OTA application, said secure element cooperating with a mobile terminal, said mobile terminal also comprising a removable card, **characterised in that** it consists of:
- recording (11) an identifier of said removable card in said secure element at the latest when said NFC application is loaded into said secure element;
- when an event (13) occurs, checking (14) in said secure element whether the identifier of the removable card present in said mobile terminal corresponds to the identifier previously stored in said secure element, in order to detect any change of removable card, and **in that** it consists of blocking (16) the execution of said NFC application if a change of removable card is detected.

2. A method according to claim 1, **characterised in that** said identifier is the ICCID of said removable card.

3. A method according to one of claims 1 and 2, **characterised in that** said identifier is the IMSI of said removable card.

4. A method according to one of claims 1 and 2, **characterised in that** said identifier is the MSISDN of said removable card.

5. A method according to one of claims 1 and 4, **characterised in that** said event (13) is the occurrence of an NFC transaction.

6. A method according to one of claims 1 to 4, **characterised in that** said event (13) is a switching on of said mobile terminal.

7. A method according to one of claims 1 to 6, **characterised in that** it also consist of notifying (16), to the issuer of said NFC application, an indication of change of removable card if such a change has been detected.

8. A method according to claim 7, **characterised in that** said notification is made by an OTA channel.

9. Method according to claim 7, **characterised in that** said notification is made by an NFC channel.

10. A method according one of claims 8 and 9, **characterised in that** it consists of the blocking (16), by the issuer of said NFC application, of the execution of said NFC application via an OTA or NFC channel.
